# EUROPEAN PATENT SPECIFICATION

(11) **EP 3 923 122 B1**
(45) Date of publication and mention of the grant of the patent: **25.09.2024**
(21) Application number: 21173752.3
(22) Date of filing: 13.05.2021
(51) Int. Cl.: G06F 3/01, H04N 13/383, G06T 11/40, G02B 27/00, G02B 27/01, H04N 13/344

(54) **GAZE TRACKING APPARATUS AND SYSTEMS**
BLICKVERFOLGUNGSVORRICHTUNG UND -SYSTEME
APPAREIL ET SYSTÈMES DE SUIVI DU REGARD

(30) Priority: 09.06.2020 GB 202008684
(43) Date of publication of application: 15.12.2021
(73) Proprietor: Sony Interactive Entertainment Inc., Tokyo 108-0075 (JP)
(72) Inventor: GUPTA, Rajeev, London, W1F 7LP (GB)
(74) Representative: D Young & Co LLP

(56) References cited:
- CN-A- 110 488 977
- US-A1- 2019 130 527
- US-A1- 2019 354 174
- US-A1- 2021 058 612
- US-B1- 10 466 779

## Description

This invention relates to gaze tracking apparatus and systems.

Gaze tracking systems are used to identify a location of a subject's gaze within an environment; in many cases, this location may be a position on a display screen that is being viewed by the subject. In a number of existing arrangements, this is performed using one or more inwards-facing cameras directed towards the subject's eye (or eyes) in order to determine a direction in which the eyes are oriented at any given time. Having identified the orientation of the eye, a gaze direction can be determined and a focal region may be determined as the intersection of the gaze direction of each eye.

One application for which gaze tracking is considered of particular use is that of use in head-mountable display units (HMDs). The use in HMDs may be of particular benefit owing to the close proximity of inward-facing cameras to the user's eyes, allowing the tracking to be performed much more accurately and precisely than in arrangements in which it is not possibly to provide the cameras with such proximity.

By utilising gaze detection techniques, it may be possible to provide a more efficient and/or effective processing method for generating content or interacting with devices.

For example, gaze tracking may be used to provide user inputs or to assist with such inputs - a continued gaze at a location may act as a selection, or a gaze towards a particular object accompanied by another input (such as a button press) may be considered as a suitable input. This may be more effective as an input method in some embodiments, particularly in those in which a controller is not provided or when a user has limited mobility.

Foveal rendering is an example of a use for the results of a gaze tracking process in order to improve the efficiency of a content generation process. Foveal rendering is rendering that is performed so as to exploit the fact that human vision is only able to identify high detail in a narrow region (the fovea), with the ability to discern detail tailing off sharply outside of this region.

In such methods, a portion of the display is identified as being an area of focus in accordance with the user's gaze direction. This portion of the display is supplied with high-quality image content, while the remaining areas of the display are provided with lower-quality (and therefore less resource intensive to generate) image content. This can lead to a more efficient use of available processing resources without a noticeable degradation of image quality for the user.

It is therefore considered advantageous to be able to improve gaze tracking methods, and/or apply the results of such methods in an improved manner. It is in the context of such advantages that the present disclosure arises. Cited references include US10466779 B1, US2019/354174 A1, US 2019/130527 A1 and CN110488977 A.

In particular, US 10,466,779 B1 discloses an eye tracking system that tracks one or more eyes of a user. The eye tracking system includes an event camera and an eye tracking module. The event camera captures images of an eye of the user. The eye tracking module determines eye tracking information (e.g., gaze direction) using the captured images. The event camera is an imaging device that includes an event sensor, which includes a plurality of photodiodes and is configured to operate in an event mode. An event sensor operating in the event mode asynchronously outputs data values corresponding to relative intensity changes of light reflected from the one or more eyes of the user. A data value output by each respective photodiode, of the plurality photodiodes, is based at least in part on a difference of a value previously output by the photodiode and an intensity value captured by the photodiode relative to an intensity threshold value. The system is configured to adjust resolution of the images displayed on the electronic display by performing foveated rendering of the displayed images, based on the determined eye tracking information obtained from the eye tracking system, whereby image signals having a target resolution corresponding to a fovea region of a human eye are provided for a portion of the electronic display that corresponds to a foveal region of the user's eye-gaze, while providing image signals with lower resolution in other regions of the electronic display. If

### SUMMARY OF THE INVENTION

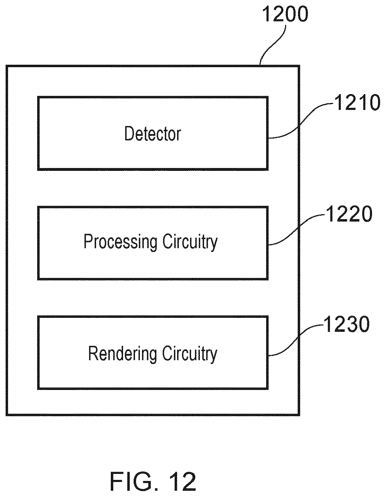

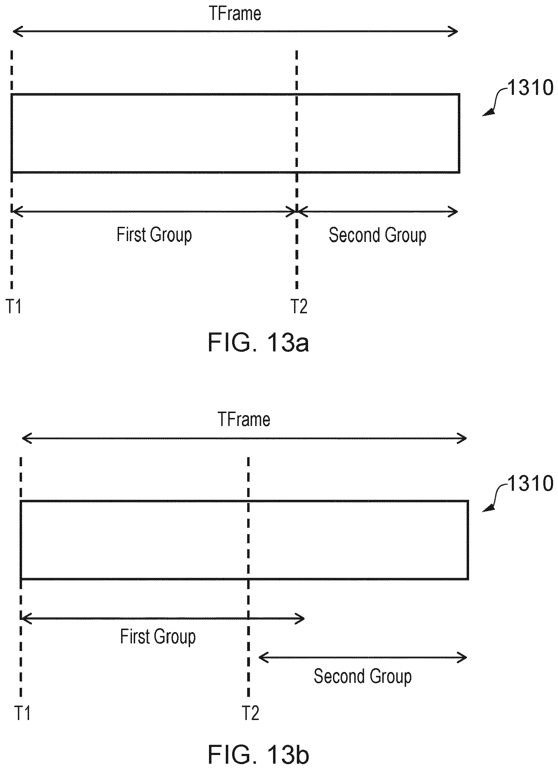

To improve on the existing systems, the present invention provides a data processing apparatus as defined in claim 1, a data processing method as defined in claim 14, and a computer software as defined in claim 15. Preferred embodiments are defined in the dependent claims. The invention as claimed is best understood in light of the embodiments described in the context of Figures 12 and 13b.

Embodiments of the invention will now be described, by way of example only, with reference to the accompanying drawings, in which:
Figure 1 schematically illustrates an HMD worn by a user;
Figure 2 is a schematic plan view of an HMD;
Figure 3 schematically illustrates the formation of a virtual image by an HMD;
Figure 4 schematically illustrates another type of display for use in an HMD;
Figure 5 schematically illustrates a pair of stereoscopic images;
Figure 6a schematically illustrates a plan view of an HMD;
Figure 6b schematically illustrates a near-eye tracking arrangement;
Figure 7 schematically illustrates a remote tracking arrangement;
Figure 8 schematically illustrates a gaze tracking environment;
Figure 9 schematically illustrates a gaze tracking system;
Figure 10 schematically illustrates a human eye;
Figure 11 schematically illustrates a graph of human visual acuity;
Figure 12 schematically illustrates a data processing apparatus;
Figures 13a and 13b schematically illustrate performing rendering operations for first and second groups of image pixels;
Figure 14 schematically illustrates an example of an image frame comprising a high resolution portion and a low resolution portion;
Figure 15 schematically illustrates 2x2 pixel groups; and
Figure 16 is a schematic flowchart illustrating a data processing method.

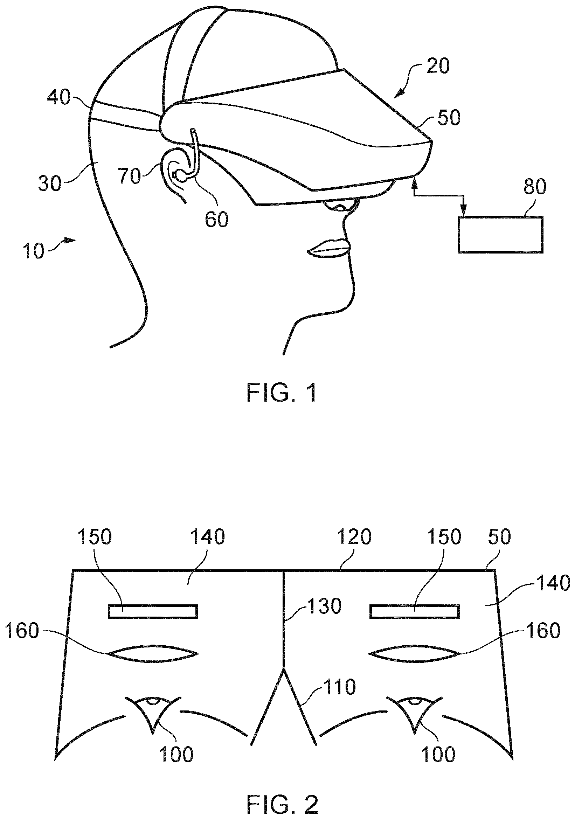

Referring now to Figure 1, a user 10 is wearing an HMD 20 (as an example of a generic head-mountable apparatus - other examples including audio headphones or a head-mountable light source) on the user's head 30. The HMD comprises a frame 40, in this example formed of a rear strap and a top strap, and a display portion 50. As noted above, many gaze tracking arrangements may be considered particularly suitable for use in HMD systems; however, use with such an HMD system should not be considered essential.

Note that the HMD of Figure 1 may comprise further features, to be described below in connection with other drawings, but which are not shown in Figure 1 for clarity of this initial explanation.

The HMD of Figure 1 completely (or at least substantially completely) obscures the user's view of the surrounding environment. All that the user can see is the pair of images displayed within the HMD, as supplied by an external processing device such as a games console in many embodiments. Of course, in some embodiments images may instead (or additionally) be generated by a processor or obtained from memory located at the HMD itself.

The HMD has associated headphone audio transducers or earpieces 60 which fit into the user's left and right ears 70. The earpieces 60 replay an audio signal provided from an external source, which may be the same as the video signal source which provides the video signal for display to the user's eyes.

The combination of the fact that the user can see only what is displayed by the HMD and, subject to the limitations of the noise blocking or active cancellation properties of the earpieces and associated electronics, can hear only what is provided via the earpieces, mean that this HMD may be considered as a so-called "full immersion" HMD. Note however that in some embodiments the HMD is not a full immersion HMD, and may provide at least some facility for the user to see and/or hear the user's surroundings. This could be by providing some degree of transparency or partial transparency in the display arrangements, and/or by projecting a view of the outside (captured using a camera, for example a camera mounted on the HMD) via the HMD's displays, and/or by allowing the transmission of ambient sound past the earpieces and/or by providing a microphone to generate an input sound signal (for transmission to the earpieces) dependent upon the ambient sound.

A front-facing camera 122 may capture images to the front of the HMD, in use. Such images may be used for head tracking purposes, in some embodiments, while it may also be suitable for capturing images for an augmented reality (AR) style experience. A Bluetooth^{®} antenna 124 may provide communication facilities or may simply be arranged as a directional antenna to allow a detection of the direction of a nearby Bluetooth^{®} transmitter.

In operation, a video signal is provided for display by the HMD. This could be provided by an external video signal source 80 such as a video games machine or data processing apparatus (such as a personal computer), in which case the signals could be transmitted to the HMD by a wired or a wireless connection 82. Examples of suitable wireless connections include Bluetooth^{®} connections. Audio signals for the earpieces 60 can be carried by the same connection. Similarly, any control signals passed from the HMD to the video (audio) signal source may be carried by the same connection. Furthermore, a power supply 83 (including one or more batteries and/or being connectable to a mains power outlet) may be linked by a cable 84 to the HMD. Note that the power supply 83 and the video signal source 80 may be separate units or may be embodied as the same physical unit. There may be separate cables for power and video (and indeed for audio) signal supply, or these may be combined for carriage on a single cable (for example, using separate conductors, as in a USB cable, or in a similar way to a "power over Ethernet" arrangement in which data is carried as a balanced signal and power as direct current, over the same collection of physical wires). The video and/or audio signal may be carried by, for example, an optical fibre cable. In other embodiments, at least part of the functionality associated with generating image and/or audio signals for presentation to the user may be carried out by circuitry and/or processing forming part of the HMD itself. A power supply may be provided as part of the HMD itself.

Some embodiments of the invention are applicable to an HMD having at least one electrical and/or optical cable linking the HMD to another device, such as a power supply and/or a video (and/or audio) signal source. So, embodiments of the invention can include, for example:
(a) an HMD having its own power supply (as part of the HMD arrangement) but a cabled connection to a video and/or audio signal source;
(b) an HMD having a cabled connection to a power supply and to a video and/or audio signal source, embodied as a single physical cable or more than one physical cable;
(c) an HMD having its own video and/or audio signal source (as part of the HMD arrangement) and a cabled connection to a power supply; or
(d) an HMD having a wireless connection to a video and/or audio signal source and a cabled connection to a power supply.

If one or more cables are used, the physical position at which the cable 82 and/or 84 enters or joins the HMD is not particularly important from a technical point of view. Aesthetically, and to avoid the cable(s) brushing the user's face in operation, it would normally be the case that the cable(s) would enter or join the HMD at the side or back of the HMD (relative to the orientation of the user's head when worn in normal operation). Accordingly, the position of the cables 82, 84 relative to the HMD in Figure 1 should be treated merely as a schematic representation.

Accordingly, the arrangement of Figure 1 provides an example of a head-mountable display system comprising a frame to be mounted onto an observer's head, the frame defining one or two eye display positions which, in use, are positioned in front of a respective eye of the observer and a display element mounted with respect to each of the eye display positions, the display element providing a virtual image of a video display of a video signal from a video signal source to that eye of the observer.

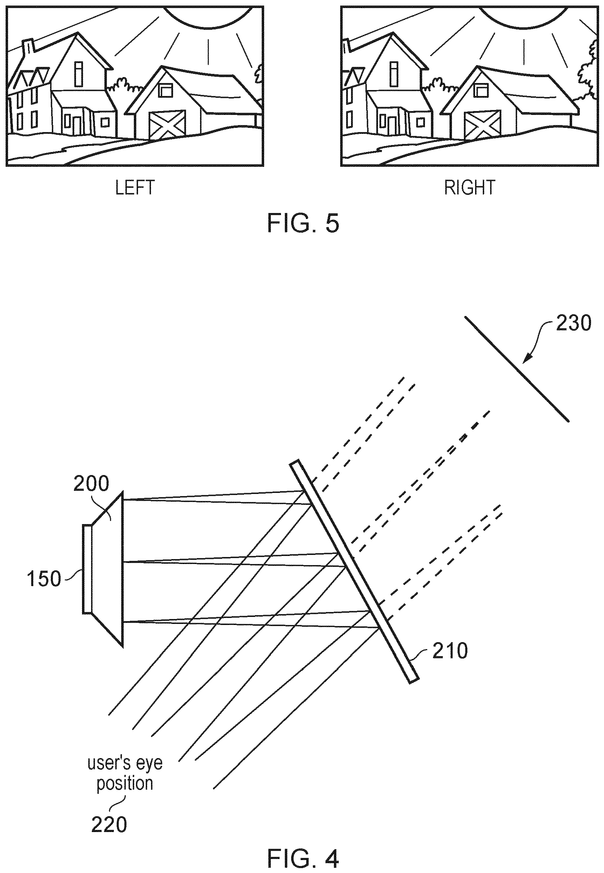

Figure 1 shows just one example of an HMD. Other formats are possible: for example an HMD could use a frame more similar to that associated with conventional eyeglasses, namely a substantially horizontal leg extending back from the display portion to the top rear of the user's ear, possibly curling down behind the ear. In other (not full immersion) examples, the user's view of the external environment may not in fact be entirely obscured; the displayed images could be arranged so as to be superposed (from the user's point of view) over the external environment. An example of such an arrangement will be described below with reference to Figure 4.

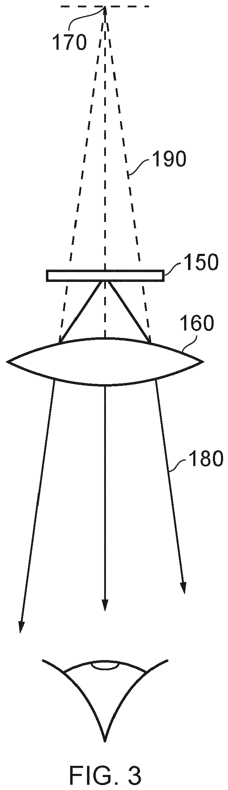

In the example of Figure 1, a separate respective display is provided for each of the user's eyes. A schematic plan view of how this is achieved is provided as Figure 2, which illustrates the positions 100 of the user's eyes and the relative position 110 of the user's nose. The display portion 50, in schematic form, comprises an exterior shield 120 to mask ambient light from the user's eyes and an internal shield 130 which prevents one eye from seeing the display intended for the other eye. The combination of the user's face, the exterior shield 120 and the interior shield 130 form two compartments 140, one for each eye. In each of the compartments there is provided a display element 150 and one or more optical elements 160. The way in which the display element and the optical element(s) cooperate to provide a display to the user will be described with reference to Figure 3.

Referring to Figure 3, the display element 150 generates a displayed image which is (in this example) refracted by the optical elements 160 (shown schematically as a convex lens but which could include compound lenses or other elements) so as to generate a virtual image 170 which appears to the user to be larger than and significantly further away than the real image generated by the display element 150. As an example, the virtual image may have an apparent image size (image diagonal) of more than 1 m and may be disposed at a distance of more than 1 m from the user's eye (or from the frame of the HMD). In general terms, depending on the purpose of the HMD, it is desirable to have the virtual image disposed a significant distance from the user. For example, if the HMD is for viewing movies or the like, it is desirable that the user's eyes are relaxed during such viewing, which requires a distance (to the virtual image) of at least several metres. In Figure 3, solid lines (such as the line 180) are used to denote real optical rays, whereas broken lines (such as the line 190) are used to denote virtual rays.

An alternative arrangement is shown in Figure 4. This arrangement may be used where it is desired that the user's view of the external environment is not entirely obscured. However, it is also applicable to HMDs in which the user's external view is wholly obscured. In the arrangement of Figure 4, the display element 150 and optical elements 200 cooperate to provide an image which is projected onto a mirror 210, which deflects the image towards the user's eye position 220. The user perceives a virtual image to be located at a position 230 which is in front of the user and at a suitable distance from the user.

In the case of an HMD in which the user's view of the external surroundings is entirely obscured, the mirror 210 can be a substantially 100% reflective mirror. The arrangement of Figure 4 then has the advantage that the display element and optical elements can be located closer to the centre of gravity of the user's head and to the side of the user's eyes, which can produce a less bulky HMD for the user to wear. Alternatively, if the HMD is designed not to completely obscure the user's view of the external environment, the mirror 210 can be made partially reflective so that the user sees the external environment, through the mirror 210, with the virtual image superposed over the real external environment.

In the case where separate respective displays are provided for each of the user's eyes, it is possible to display stereoscopic images. An example of a pair of stereoscopic images for display to the left and right eyes is shown in Figure 5. The images exhibit a lateral displacement relative to one another, with the displacement of image features depending upon the (real or simulated) lateral separation of the cameras by which the images were captured, the angular convergence of the cameras and the (real or simulated) distance of each image feature from the camera position.

Note that the lateral displacements in Figure 5 could in fact be the other way round, which is to say that the left eye image as drawn could in fact be the right eye image, and the right eye image as drawn could in fact be the left eye image. This is because some stereoscopic displays tend to shift objects to the right in the right eye image and to the left in the left eye image, so as to simulate the idea that the user is looking through a stereoscopic window onto the scene beyond. However, some HMDs use the arrangement shown in Figure 5 because this gives the impression to the user that the user is viewing the scene through a pair of binoculars. The choice between these two arrangements is at the discretion of the system designer.

In some situations, an HMD may be used simply to view movies and the like. In this case, there is no change required to the apparent viewpoint of the displayed images as the user turns the user's head, for example from side to side. In other uses, however, such as those associated with virtual reality (VR) or augmented reality (AR) systems, the user's viewpoint needs to track movements with respect to a real or virtual space in which the user is located.

As mentioned above, in some uses of the HMD, such as those associated with virtual reality (VR) or augmented reality (AR) systems, the user's viewpoint needs to track movements with respect to a real or virtual space in which the user is located.

This tracking is carried out by detecting motion of the HMD and varying the apparent viewpoint of the displayed images so that the apparent viewpoint tracks the motion. The detection may be performed using any suitable arrangement (or a combination of such arrangements). Examples include the use of hardware motion detectors (such as accelerometers or gyroscopes), external cameras operable to image the HMD, and outwards-facing cameras mounted onto the HMD.

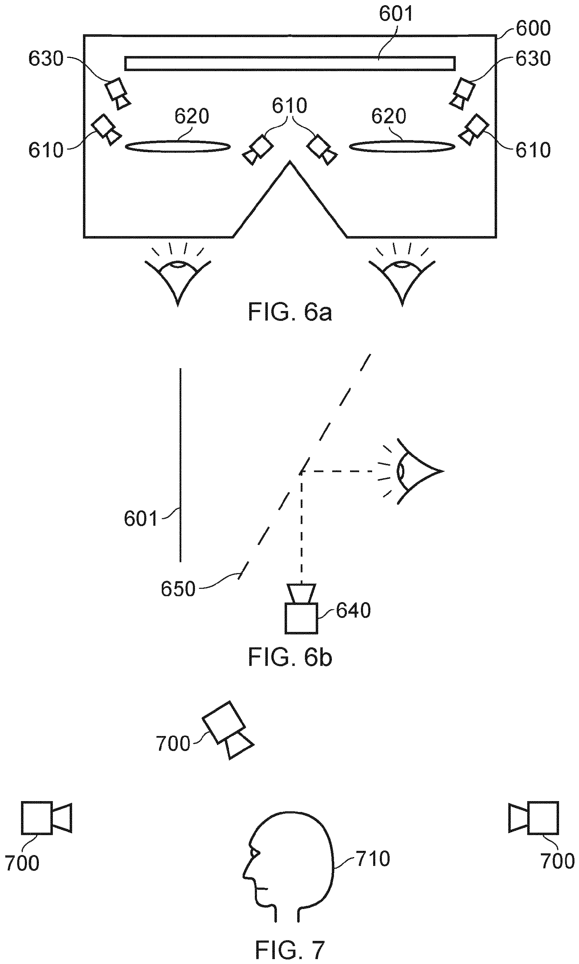

Turning to gaze tracking in such an arrangement, Figure 6 schematically illustrates two possible arrangements for performing eye tracking on an HMD. The cameras provided within such arrangements may be selected freely so as to be able to perform an effective eye-tracking method. In some existing arrangements, visible light cameras are used to capture images of a user's eyes. Alternatively, infra-red (IR) cameras are used so as to reduce interference either in the captured signals or with the user's vision should a corresponding light source be provided, or to improve performance in low-light conditions.

Figure 6a shows an example of a gaze tracking arrangement in which the cameras are arranged within an HMD so as to capture images of the user's eyes from a short distance. This may be referred to as near-eye tracking, or head-mounted tracking.

In this example, an HMD 600 (with a display element 601) is provided with cameras 610 that are each arranged so as to directly capture one or more images of a respective one of the user's eyes using an optical path that does not include the lens 620. This may be advantageous in that distortion in the captured image due to the optical effect of the lens is able to be avoided. Four cameras 610 are shown here as examples of possible positions that eye-tracking cameras may provided, although it should be considered that any number of cameras may be provided in any suitable location so as to be able to image the corresponding eye effectively. For example, only one camera may be provided per eye or more than two cameras may be provided for each eye.

However it is considered that in a number of embodiments it is advantageous that the cameras are instead arranged so as to include the lens 620 in the optical path used to capture images of the eye. Examples of such positions are shown by the cameras 630. While this may result in processing being required to enable suitably accurate tracking to be performed, due to the deformation in the captured image due to the lens, this may be performed relatively simply due to the fixed relative positions of the corresponding cameras and lenses. An advantage of including the lens within the optical path may be that of simplifying the physical constraints upon the design of an HMD, for example.

Figure 6b shows an example of a gaze tracking arrangement in which the cameras are instead arranged so as to indirectly capture images of the user's eyes. Such an arrangement may be particularly suited to use with IR or otherwise non-visible light sources, as will be apparent from the below description.

Figure 6b includes a mirror 650 arranged between a display 601 and the viewer's eye (of course, this can be extended to or duplicated at the user's other eye as appropriate). For the sake of clarity, any additional optics (such as lenses) are omitted in this Figure - it should be appreciated that they may be present at any suitable position within the depicted arrangement. The mirror 650 in such an arrangement is selected so as to be partially transmissive; that is, the mirror 650 should be selected so as to enable the camera 640 to obtain an image of the user's eye while the user views the display 601. One method of achieving this is to provide a mirror 650 that is reflective to IR wavelengths but transmissive to visible light - this enables IR light used for tracking to be reflected from the user's eye towards the camera 640 while the light emitted by the display 601 passes through the mirror uninterrupted.

Such an arrangement may be advantageous in that the cameras may be more easily arranged out of view of the user, for instance. Further to this, improvements to the accuracy of the eye tracking may be obtained due to the fact that the camera captures images from a position that is effectively (due to the reflection) along the axis between the user's eye and the display.

Of course, eye-tracking arrangements need not be implemented in a head-mounted or otherwise near-eye fashion as has been described above. For example, Figure 7 schematically illustrates a system in which a camera is arranged to capture images of the user from a distance; this distance may vary during tracking, and may take any value in dependence upon the parameters of the tracking system. For example, this distance may be thirty centimetres, a metre, five metres, ten metres, or indeed any value so long as the tracking is not performed using an arrangement that is affixed to the user's head.

In Figure 7, an array of cameras 700 is provided that together provide multiple views of the user 710. These cameras are configured to capture information identifying at least the direction in which a user's 710 eyes are focused, using any suitable method. For example, IR cameras may be utilised to identify reflections from the user's 710 eyes. An array of cameras 700 may be provided so as to provide multiple views of the user's 710 eyes at any given time, or may be provided so as to simply ensure that at any given time at least one camera 700 is able to view the user's 710 eyes. It is apparent that in some use cases it may not be necessary to provide such a high level of coverage and instead only one or two cameras 700 may be used to cover a smaller range of possible viewing directions of the user 710.

Of course, the technical difficulties associated with such a long-distance tracking method may be increased; higher resolution cameras may be required, as may stronger light sources for generating IR light, and further information (such as head orientation of the user) may need to be input to determine a focus of the user's gaze. The specifics of the arrangement may be determined in dependence upon a required level of robustness, accuracy, size, and/or cost, for example, or any other design consideration.

Despite technical challenges including those discussed above, such tracking methods may be considered beneficial in that they allow a greater range of interactions for a user - rather than being limited to HMD viewing, gaze tracking may be performed for a viewer of a television, for instance.

Rather than varying only in the location in which cameras are provided, eye-tracking arrangements may also differ in where the processing of the captured image data to determine tracking data is performed.

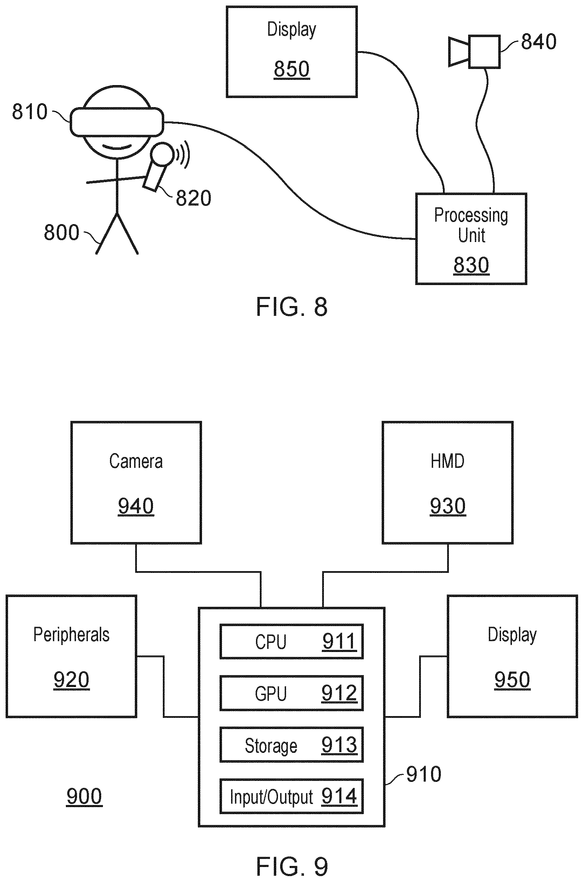

Figure 8 schematically illustrates an environment in which an eye-tracking process may be performed. In this example, the user 800 is using an HMD 810 that is associated with the processing unit 830, such as a games console, with the peripheral 820 allowing a user 800 to input commands to control the processing. The HMD 810 may perform eye tracking in line with an arrangement exemplified by Figure 6a or 6b, for example - that is, the HMD 810 may comprise one or more cameras operable to capture images of either or both of the user's 800 eyes. The processing unit 830 may be operable to generate content for display at the HMD 810; although some (or all) of the content generation may be performed by processing units within the HMD 810.

The arrangement in Figure 8 also comprises a camera 840, located outside of the HMD 810, and a display 850. In some cases, the camera 840 may be used for performing tracking of the user 800 while using the HMD 810, for example to identify body motion or a head orientation. The camera 840 and display 850 may be provided as well as or instead of the HMD 810; for example these may be used to capture images of a second user and to display images to that user while the first user 800 uses the HMD 810, or the first user 800 may be tracked and view content with these elements instead of the HMD 810. That is to say, the display 850 may be operable to display generated content provided by the processing unit 830 and the camera 840 may be operable to capture images of one or more users' eyes to enable eye-tracking to be performed.

While the connections shown in Figure 8 are shown by lines, this should of course not be taken to mean that the connections should be wired; any suitable connection method, including wireless connections such as wireless networks or Bluetooth^{®}, may be considered suitable. Similarly, while a dedicated processing unit 830 is shown in Figure 8 it is also considered that the processing may in some embodiments be performed in a distributed manner - such as using a combination of two or more of the HMD 810, one or more processing units, remote servers (cloud processing), or games consoles.

The processing required to generate tracking information from captured images of the user's 800 eye or eyes may be performed locally by the HMD 810, or the captured images or results of one or more detections may be transmitted to an external device (such as a the processing unit 830) for processing. In the former case, the HMD 810 may output the results of the processing to an external device for use in an image generation process if such processing is not performed exclusively at the HMD 810. In embodiments in which the HMD 810 is not present, captured images from the camera 840 are output to the processing unit 830 for processing.

Figure 9 schematically illustrates a system for performing one or more eye tracking processes, for example in an embodiment such as that discussed above with reference to Figure 8. The system 900 comprises a processing device 910, one or more peripherals 920, an HMD 930, a camera 940, and a display 950. Of course, not all elements need be present within the system 900 in a number of embodiments - for instance, if the HMD 930 is present then it is considered that the camera 940 may be omitted as it is unlikely to be able to capture images of the user's eyes.

As shown in Figure 9, the processing device 910 may comprise one or more of a central processing unit (CPU) 911, a graphics processing unit (GPU) 912, storage (such as a hard drive, or any other suitable data storage medium) 913, and an input/output 914. These units may be provided in the form of a personal computer, a games console, or any other suitable processing device.

For example, the CPU 911 may be configured to generate tracking data from one or more input images of the user's eyes from one or more cameras, or from data that is indicative of a user's eye direction. This may be data that is obtained from processing images of the user's eye at a remote device, for example. Of course, should the tracking data be generated elsewhere then such processing would not be necessary at the processing device 910.

The GPU 912 may be configured to generate content for display to the user on which the eye tracking is being performed. In some embodiments, the content itself may be modified in dependence upon the tracking data that is obtained - an example of this is the generation of content in accordance with a foveal rendering technique. Of course, such content generation processes may be performed elsewhere - for example, an HMD 930 may have an on-board GPU that is operable to generate content in dependence upon the eye tracking data.

The storage 913 may be provided so as to store any suitable information. Examples of such information include program data, content generation data, and eye tracking model data. In some cases, such information may be stored remotely such as on a server, and as such a local storage 913 may not be required - the discussion of the storage 913 should therefore be considered to refer to local (and in some cases removable storage media) or remote storage.

The input/output 914 may be configured to perform any suitable communication as appropriate for the processing device 910. Examples of such communication include the transmission of content to the HMD 930 and/or display 950, the reception of eye-tracking data and/or images from the HMD 930 and/or the camera 940, and communication with one or more remote servers (for example, via the internet).

As discussed above, the peripherals 920 may be provided to allow a user to provide inputs to the processing device 910 in order to control processing or otherwise interact with generated content. This may be in the form of button presses or the like, or alternatively via tracked motion to enable gestures to be used as inputs.

The HMD 930 may comprise a number of sub-elements, which have been omitted from Figure 9 for the sake of clarity. Of course, the HMD 930 should comprise a display unit operable to display images to a user. In addition to this, the HMD 930 may comprise any number of suitable cameras for eye tracking (as discussed above), in addition to one or more processing units that are operable to generate content for display and/or generate eye tracking data from the captured images.

The camera 940 and display 950 may be configured in accordance with the discussion of the corresponding elements above with respect to Figure 8.

Turning to the image capture process upon which the eye tracking is based, examples of different cameras are discussed. The first of these is a standard camera, which captures a sequence of images of the eye that may be processed to determine tracking information. The second is that of an event camera, which instead generates outputs in response to observed changes in the incident light, as discussed later.

Traditional image-based gaze tracking techniques use standard cameras given that they are widely available and often relatively cheap to produce. 'Standard cameras' here refer to cameras which capture images of the environment at predetermined intervals which can be combined to generate video content. For example, a typical camera of this type may capture thirty image frames each second, and these images may be output to a processing unit for feature analysis or the like to be performed so as to enable tracking of the eye.

Such a camera comprises a light-sensitive array that is operable to record light information during an exposure time, with the exposure time being controlled by a shutter speed (the speed of which dictates the frequency of image capture). The shutter may be configured as a rolling shutter (line-by-line reading of the captured information) or a global shutter (reading the captured information of the whole frame simultaneously), for example.

Independent of the type of camera that is selected, in many cases it may be advantageous to provide illumination to the eye in order to obtain a suitable image. One example of this is the provision of an IR light source that is configured to emit light in the direction of one or both of the user's eyes; an IR camera may then be provided that is able to detect reflections from the user's eye in order to generate an image. IR light may be preferable as it is invisible to the human eye, and as such does not interfere with normal viewing of content by the user, but it is not considered to be essential. In some cases, the illumination may be provided by a light source that is affixed to the imaging device, while in other embodiments it may instead be that the light source is arranged away from the imaging device.

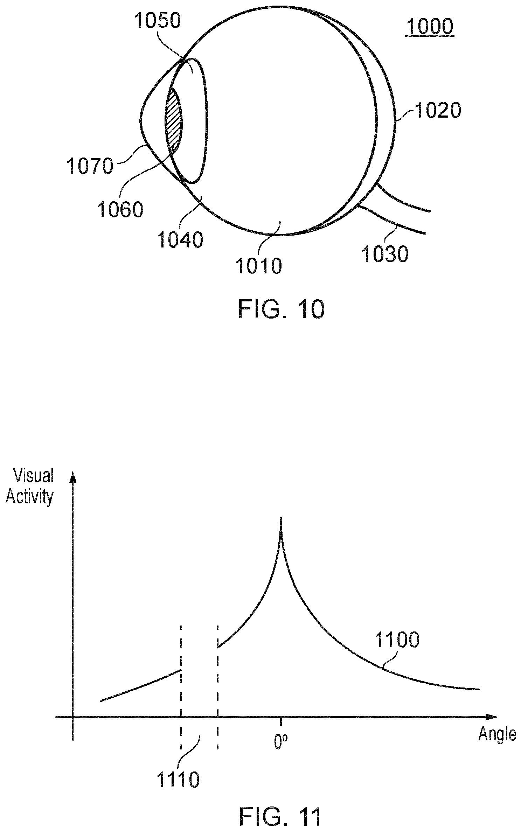

As suggested in the discussion above, the human eye does not have a uniform structure; that is, the eye is not a perfect sphere, and different parts of the eye have different characteristics (such as varying reflectance or colour). Figure 10 shows a simplified side view of the structure of a typical eye 1000; this Figure has omitted features such as the muscles which control eye motion for the sake of clarity.

The eye 1000 is formed of a near-spherical structure filled with an aqueous solution 1010, with a retina 1020 formed on the rear surface of the eye 1000. The optic nerve 1030 is connected at the rear of the eye 1000. Images are formed on the retina 1020 by light entering the eye 1000, and corresponding signals carrying visual information are transmitted from the retina 1020 to the brain via the optic nerve 1030.

Turning to the front surface of the eye 1000, the sclera 1040 (commonly referred to as the white of the eye) surrounds the iris 1050. The iris 1050 controls the size of the pupil 1060, which is an aperture through which light enters the eye 1000. The iris 1050 and pupil 1060 are covered by the cornea 1070, which is a transparent layer which can refract light entering the eye 1000. The eye 1000 also comprises a lens (not shown) that is present behind the iris 1050 that may be controlled to adjust the focus of the light entering the eye 1000.

The structure of the eye is such that there is an area of high visual acuity (the fovea), with a sharp drop off either side of this. This is illustrated by the curve 1100 of Figure 11, with the peak in the centre representing the foveal region. The area 1110 is the 'blind spot'; this is an area in which the eye has no visual acuity as it corresponds to the area where the optic nerve meets the retina. The periphery (that is, the viewing angles furthest from the fovea) is not particularly sensitive colour or detail, and instead is used to detect motion.

As has been discussed above, foveal rendering is a rendering technique that takes advantage of the relatively small size (around 2.5 degrees) of the fovea and the sharp fall-off in acuity outside of that.

The eye undergoes a large amount of motion during viewing, and this motion may be categorised into one of a number of categories.

A saccadic eye movement is identified as a fast motion of the eye in which the eye moves in a ballistic manner to abruptly change a point of fixation. This may be considered as ballistic movement, in that once the movement of the eye has been initiated to change a point of focus from a current point of focus to a target point of focus (next point of focus), the target point of focus and the direction of movement of the eye to move the point of focus to the target point of focus cannot be altered by the human visual system. As such, during the course of the eye movement to change the saccade from the current fixation point to the next fixation point for the eye it is not possible to interrupt the eye movement, and upon reaching the target fixation point the eye remains stationary for a period of time (a fixation pause) to focus on the target fixation point before subsequent eye movement can be initiated. It is sometimes observed that a saccade is followed by a second smaller corrective saccade that is performed to bring the eye closer to the target fixation point. Such a corrective saccade typically occurs after a very short period of time. A saccade can range in size from a small eye movement made while reading, for example, to a much larger eye movement made when observing a surrounding environment. Saccades are often not conscious eye movements, and instead are performed reflexively to focus on a target when surveying an environment. Saccades may last up to two hundred milliseconds, depending on the angle rotated by the eye to change the position of the fovea and thus the foveal region of the viewer's vision to thereby change the point of fixation for the eye, but may be as short as twenty milliseconds. The rotational speed of the eye during a saccade is also dependent upon a magnitude of a total rotation angle of the eye; typical speeds may range from two hundred to five hundred degrees per second.

'Smooth pursuit' refers to a slower movement type than a saccade. Smooth pursuit is generally associated with a conscious tracking of a point of focus by a viewer, and is performed so as to maintain the position of a target within (or at least substantially within) the foveal region of the viewer's vision. This enables a high-quality view of a target of interest to be maintained in spite of motion. If the target moves too fast, then smooth pursuit may instead require a number of saccades in order to keep up; this is because smooth pursuit has a lower maximum speed, in the region of thirty degrees per second.

The vestibular-ocular reflex is a further example of eye motion. The vestibular-ocular reflex is the motion of the eyes that counteracts head motion; that is, the motion of the eyes relative to the head that enables a person to remain focused on a particular point despite moving their head.

Another type of motion is that of the vergence accommodation reflex. This is the motion that causes the eyes to rotate to converge at a point, and the corresponding adjustment of the lens within the eye to cause that point to come into focus.

Further eye motions that may be observed as a part of a gaze tracking process are those of blinks or winks, in which the eyelid covers the eyes of the user.

Movements of the eye are performed by a user wearing an HMD whilst viewing images displayed by the HMD to enable detailed visual analysis of a portion of an image displayed by the HMD. In particular, the eye can be rotated to reposition the fovea and the pupil to enable detailed visual analysis for the portion of the image for which light is incident upon the fovea. Similarly, movements of the eye are also performed by a user not wearing an HMD whilst viewing images displayed by a display unit, such as the display unit 850 or 950 described previously with reference to Figures 8 and 9.

Conventional image-based gaze tracking techniques use a camera comprising an image sensor configured to capture respective image frames at a fixed frame rate specified by a system clock (e.g. 30 frames per second). Features associated with an eye can be identified in each image frame and the positions of the features can be tracked across multiple image frames to track the user's gaze direction. For example, conventional gaze tracking techniques may rely on identifying a corneal reflection and a pupil as features to track, such that a gaze direction can be calculated at fixed time intervals according to the tracked positions of these features in the image frames. Consequently, conventional image-based gaze tracking techniques rely on capturing complete image frames at a fixed frame rate and a calculation of the user's gaze direction using the respective image frames can only be performed at fixed time intervals. In addition, using respective image frames in this way often requires a feature analysis to be performed for each complete image frame which can introduce further timing constraints when calculating the gaze direction. As such, in conventional image-based gaze tracking techniques the time between a user physically changing their gaze direction and a system generating data indicative of the gaze direction for use in controlling data processing operations can be affected by requirements such as the time taken for camera exposure, the time taken to readout the signals and transfer the complete image frames, the time taken for calculation of the gaze direction based on feature detection in the respective image frames, as well as other possible delays in the system. The timing constraints associated with conventional image-based gaze tracking therefore impose restrictions on the possible uses of gaze tracking.

The operations to be discussed below relate to calculating a gaze direction using a detector configured to detect events in response to changes in light incident upon the detector and performing rendering operations to render image frames responsive to the calculated gaze direction. In particular, a gaze direction of an eye of a user can be calculated in dependence upon detected events rather than being calculated at fixed time intervals determined by a fixed frame rate for a camera. The gaze direction can thus be calculated with improved timing characteristics and rendering operations for rendering an image frame can be controlled responsive to the gaze direction.

Figure 12 schematically illustrates a data processing apparatus 1200 for calculating a gaze direction of a user's eye and rendering an image frame responsive to the calculated gaze direction. In embodiments of the disclosure, the data processing apparatus 1200 comprises: a detector 1210 comprising a plurality of sensor elements to detect events in response to changes in light incident upon the detector from an eye of a user; processing circuitry 1220 to calculate a gaze direction of the eye of the user in dependence upon an output signal from the detector indicative of the detected events; and rendering circuitry 1230 to render an image frame in accordance with the calculated gaze direction, in which the rendering circuitry 1230 is configured to: perform rendering operations for a first group of image pixels in the image frame; select a second group of image pixels in the image frame in dependence upon the calculated gaze direction, the second group of image pixels being different from the first group of image pixels; and perform rendering operations for the second group of image pixels in the image frame. The data processing apparatus 1200 may be provided as part of a processing device such as the processing device 910 or provided as part of an HMD. In some examples, the detector 1210 may be provided as part of an HMD and the processing circuitry 1220 and the rendering circuitry 1230 may be provided as part of a separate processing device configured to communicate with the HMD via a wireless or wired communication.

The detector 1210 may be provided as part of an HMD and mounted to enable eye-tracking, or the detector 1210 may be located outside an HMD and mounted to enable eye-tracking for a user not wearing an HMD. For example, the detector 1210 may be provided as part of the camera 840 discussed previously with respect to Figure 8 or in some cases the detector 1210 may be provided as part of an event camera that is used in place of or in addition to the camera 840 illustrated in Figure 8. In some examples, the detector 1210 can be provided as part of an HMD, in which case the detector 1210 can be provided as part of the camera 610 discussed previously with respect to Figure 6. In some cases the detector 1210 may be provided as part of an event camera that is used in place of or in addition to the camera 610 illustrated in Figure 6.

The data processing apparatus 1200 comprises at least one detector 1210. In some embodiments, a single detector 1210 is provided to detect events in response to changes in light incident upon the detector 1210 from a single eye of the user so that a gaze direction for that eye of the user can be calculated in dependence upon the properties of the detected events. As such, the at least one detector 1210 is arranged so that at least a portion of the field of view for the detector includes the eye of the user. In some examples, the detector 1210 is configured such that the field of view includes both of a user's eyes such that detection results from the detector 1210 can be used to calculate a first gaze direction for a first eye and a second gaze direction for a second eye. Alternatively, a first detector 1210 can be provided for which the field of view includes one of the user's eyes and a second detector 1210 can be provided for which the field of view includes the other of the user's eyes. By providing a respective detector 1210 for each eye, detected events for each eye can be output and the outputs of the respective detectors 1210 indicative of the detected eye movements for the respective eyes can be provided to the processing circuitry 1220 to calculate a gaze direction for the respective eyes.

The detector 1210 comprises the plurality of sensor elements configured to detect events in response to changes in the light incident upon the detector 1210 from an eye of a user. Instead of capturing entire image frames at a fixed frame rate such that every senor element (sensor pixel) is readout for every frame according to a system clock as per a conventional CCD image sensor, the detector 1210 comprises sensor elements in which each sensor element is capable of operating independently of the other sensor elements to detect an event and output a signal in response to detecting an event. Therefore, the detector 1210 is capable of measuring changes in light on a per-sensor element basis and generating an output signal comprising events detected by the respective sensor elements in a manner such that the detector 1210 can detect changes in a scene asynchronously and independently for respective sensor elements. The detector 1210 comprises a sensor element array comprising the plurality of sensor elements and light from the portion of the environment included within the field of view of the detector 1210 is incident upon the sensor element array. Each sensor element is configured to sense light incident upon that sensor element and to detect an event in dependence upon whether a property of the light that is incident upon that sensor element satisfies a criterion used for event detection. In this way, events can be detected in response to changes in the light incident upon the detector 1210 such that events can be detected by respective sensor elements and thus detected with a high temporal resolution, and the processing circuitry 1220 can be configured to calculate the gaze direction of the eye in dependence upon an output signal from the detector 1210 indicative of the events detected by the respective sensor elements. In some embodiments, each sensor element comprises at least one photodiode which when exposed to light generates an electric current.

Therefore, the data processing apparatus 1200 comprises a detector 1210 for which a sensor element operates independently of the other sensor elements to generate an output signal when the light incident upon that sensor element satisfies a criterion used for event detection. In this way, each sensor element can be considered as an independent sensor capable of generating an output signal depending on the light that is incident upon that sensor element. Each sensor element is responsive to relative changes in intensity of the light incident upon that sensor element. Events can therefore be detected responsive to the light incident upon a given sensor element satisfying a detection criterion, and any given sensor element of the plurality of sensor elements can generate an output signal when the given sensor detects an event such that events can be output by the detector 1210 asynchronously. For example, as the user's eye rotates when observing content displayed on a display unit, the light incident upon a given sensor element of the plurality of sensor elements changes and when the change in the light incident upon the given sensor element satisfies a predetermined criterion the sensor element is configured to detect an event in response to the change in the light and to generate an output signal. Similarly, the light incident upon another sensor element (for example a sensor element adjacent to the given sensor element) of the plurality of sensor elements may also change as the user's eye moves such that the change in the light incident upon the another sensor element satisfies the predetermined criterion at a later time and the another sensor element can be configured to detect an event in response to the change in the light and to generate an output signal at the later time. In some examples, the output signal generated by a sensor element may take the form of a two level logic signal such that one of an active high signal and an active low signal output by the sensor element is indicative of a detection of an event.

In embodiments of the disclosure, each sensor element is configured to detect an event when a change in intensity of the light incident upon the sensor element satisfies a predetermined threshold condition. Each sensor element of the plurality of sensor elements is configured to generate an output signal indicative of a detected event in dependence upon whether a change in the intensity of the light detected by the sensor element satisfies a predetermined threshold condition, so that when the change in light for a given sensor element satisfies the predetermined threshold condition the detector 1210 outputs a detected event to the processing circuitry 1220. For example, one or more predetermined thresholds may be set in advance for comparison with a magnitude of the change in the intensity of light since the detection of the previous event by the sensor element, such that detection of an event is triggered by a change in a magnitude of the intensity of the light. A first predetermined threshold may be set for comparison with an increase in the intensity of the light relative to the previous event and a second predetermined threshold may be set for comparison with a decrease in the intensity of the light relative to the previous event, such that an event having a positive polarity is detected when the intensity of light is greater than the first predetermined threshold and an event having a negative polarity is detected when the intensity of light is less than the second predetermined threshold. Alternatively, one or more predetermined thresholds may be set in advance for comparison with a rate of change in intensity of light. A first predetermined threshold may be set such that detection of an event is triggered depending on a rate of change of the intensity of the light that is incident upon a sensor element. In some examples, a first predetermined threshold is set such that when a rate of change of the intensity of the light is greater than the first predetermined threshold a detection of an event is triggered. In some examples, a first predetermined threshold is set for comparison with a rate of increase in the intensity of light and a second predetermined threshold is set for comparison with a rate of decrease in the intensity of light, such that an event having a positive polarity can be detected based on the first predetermined threshold and an event having a negative polarity can be detected based on the second predetermined threshold. It will be appreciated a predetermined threshold condition may be set for each sensor element according to a bias voltage setting for the sensor element for comparison with a voltage signal generated by the sensor element in response to incident light.

In embodiments of the disclosure, the output signal from the detector 1210 comprises a stream of detected events, each detected event comprising sensor element position information. The detector 1210 is configured to detect events and generate an output signal comprising the detected events, in which each detected event comprises information indicative of one or more properties for the event. The detector 1210 is configured to generate an output signal comprising one or more detected events in response to detecting a change in the light that satisfies the predetermined threshold condition used for event detection, in which a detected event comprises sensor element position information indicative of a position of the sensor element responsible for detecting the event. Each of the detected events has corresponding sensor element position information. The faster the motion of the user's eye, the more events per second are detected by the detector 1210. When the user's eye moves quickly a larger number of events will be detected per unit time by the detector 1210 due to the changes in the intensity of the light incident upon the respective sensor elements, whereas when the user's eye remains relatively still a smaller number of events will be detected per unit time by the detector 1210. Therefore, the rate at which events are detected provides an indication of the amount of motion of the user's eye. For example, the sensor element position information may take the form of a sensor element ID which indicates a relative position of the sensor element that detected the event with respect to the plurality of sensor elements. Alternatively, the sensor element position information may take the form of an x, y coordinate for the position of the sensor element. Therefore, the processing circuitry 1220 can be configured to receive the output signal from the detector 1210 and the processing circuitry 1220 is thus provided with information regarding a time of an event and a position of the sensor element that detected the event. On this basis the gaze direction of the eye included within the field of view of the detector 1210 can be calculated. The timing information for the detected event may be indicated by the time at which the detected event is received by the processing circuitry 1220. Alternatively, as discussed below the detected event may comprise time information for the detected event in addition to the sensor element position information.

In embodiments of the disclosure, each detected event comprises time information. The detector 1210 can be configured to detect events and to output an output signal indicative of the detected events to processing circuitry 1220, in which a detected event comprises time information and sensor element information. The time information may be a timestamp indicative of a time at which the event is detected by the sensor element (the time at which the sensor element detects that the change in the light satisfies the predetermined threshold condition used for event detection) and the sensor element information indicates the position of the sensor element responsible for detecting the event.

In embodiments of the disclosure, each detected event comprises polarity information indicative of either an increase or a decrease in the intensity of the light. As discussed previously, the predetermined threshold condition may optionally comprise a first predetermined threshold and a second predetermined threshold so that an event which is detected in response to an increase (in the magnitude and/or the rate of change) of the intensity of the light incident upon a sensor element can be associated with polarity information indicative of a "positive event" and an event detected in response to a decrease (in the magnitude and/or the rate of change) of the intensity of the light incident upon a sensor element can be associated with polarity information indicative of a "negative event". The polarity information may take the form of a binary indicator for indicating either an event associated with an increase in intensity or an event associated with a decrease in intensity. Whilst the processing circuitry 1220 may optionally use the polarity information for calculating the gaze direction of the eye in addition to the time information and the sensor element position information, in some examples the processing circuitry 1220 is configured to calculate the gaze direction of the eye in dependence upon detected events comprising sensor element position information and time information (which may be indicated by the time at which the event is received by the processing circuitry 1220 or provided as timing information for the detected event) without using polarity information.

In embodiments of the disclosure, the data processing apparatus 1200 comprises an event camera, in which the event camera comprises the detector 1210. The detector 1210 comprises the plurality of sensor elements and in some embodiments the detector 1210 may be provided as part of an event camera. An event camera differs from a conventional frame-based camera in that an event camera does not have a shutter for exposing the detector 1210 at fixed intervals. Rather, the detector 1210 in the event camera can be continually exposed and each sensor element operates independently thus allowing event detection with a temporal resolution of the order of microseconds. Therefore, each sensor element can be configured to continuously sense the incident light and compare a sensing signal generated in dependence upon the incident light with a reference signal determined by the predetermined threshold condition to detect an event responsive to changes in the incident light. In some examples, the event camera may be an Infra-Red (IR) sensitive event camera such that an IR light source can be used to illuminate the eye. When imaged using IR light, the pupil of the human eye displays a much higher level of brightness than the surrounding features.

In embodiments of the disclosure, the event camera comprises at least one other detector 1210. The event camera may comprise a first detector 1210 arranged so that a field of view includes a first eye of the user and a second detector 1210 arranged to that a field of view includes the other eye of the user. In some examples, the event camera may be mounted in front of a user such as on a frame of a display unit. Alternatively, the event camera may be mounted inside an HMD.

Referring again to Figure 12, the processing circuitry 1220 is configured to calculate a gaze direction of the eye of the user in dependence upon the output signal from the detector 1210 indicative of the detected events. The output signal indicates the properties of the events detected by the detector 1210, where each detected event has an associated time information and sensor element position information. On the basis of the detected events, the processing circuitry 1220 is configured to detect the gaze direction of the eye of the user. The timing and the position associated with a detected event provides an indication of the time at which an individual sensor element in the detector 1210 observed a movement of the eye causing a change in the light incident upon the sensor element, and by providing a stream of detected events to the processing circuitry 1220 a shape of a portion of the eye, such as the pupil and/or the iris, can be identified in the detected events. Specifically, events can be detected as the eye moves on the basis of the change in light incident upon the sensor elements which provides an indication of the position of the edge of the pupil and/or the edge of the iris. For example, on the basis of the positions of the events, a 2D shape can be fitted to the positions of the events to identify a shape of the pupil and/or iris. The processing circuitry 1220 can be configured to calculate a 2D shape of the pupil and/or iris in dependence upon the detected events, and the processing circuitry 1220 can be configured to calculate a gaze direction of eye in dependence upon the 2D shape. In the case where the 2D shape corresponding to the pupil is substantially circular this indicates that the gaze direction is directed towards the detector 1210, whereas when the gaze is directed at an angle relative to the plane on which the plurality of sensor elements is arranged the 2D shape corresponding to the pupil becomes more elliptic. Therefore, a mapping between the 2D shape of the pupil and/or the iris and a vector with respect to the detector 1210 indicative of the gaze direction with respect to the detector 1210 can be used for calculating the gaze direction of the user's eye in dependence upon the events detected by the detector 1210. For example, one or more parameters associated with the eccentricity of the calculated 2D shape of the pupil and/or iris can be calculated and a mapping between the one or more parameters and the vector with respect to the sensor element plane of the detector 1210 can be used to calculate the gaze direction of the eye with respect to the detector in dependence upon the 2D shape.

Therefore, the processing circuitry 1220 can be configured to calculate the gaze direction of the eye of the user with respect to the detector 1210 on the basis of the output signal from the detector 1210, and the rendering circuitry 1230 can be configured to perform rendering operations to render one or more image frames in accordance with the gaze direction calculated by the processing circuitry 1220. The detected gaze direction defines a direction from the user's eye and on the basis of this direction a region of a display unit being viewed by the user can be established.

Foveal rendering is a rendering technique in which image frames are rendered according to a user's gaze direction to improve the efficiency of rendering image frames by rendering a portion of an image frame corresponding to the gaze direction with a higher image resolution than other portions of the image frame. Since the human vision is only able to identify high detail in a relatively narrow region (the fovea) of the eye's field of view, the portions of the image frame which are positioned outside this narrow region can be rendered with a lower image resolution without a noticeable degradation of image quality for the user.

The speed and realism with which a scene can be rendered is a key consideration in the field of computer graphics processing. Rendering operations are performed by the rendering circuitry 1230 (which is provided as part of a GPU and/or a CPU) as part of an execution of an application such as a computer game to render an image frame. Rendering operations typically comprise processing of model data or other predefined graphical data to obtain pixel values for the image pixels in the image frame. The rendering circuitry 1230 is configured to render respective image frames such that image frames can be displayed by a display unit of an HMD or the display unit 850. References herein to images frames refer to either stereoscopic image frames comprising left and right images, or a single image frame that is to be viewed by both eyes of the user.

The rendering circuitry 1230 is configured to perform rendering operations for a given image pixel in an image frame to calculate a pixel value for the given image pixel. The rendering operations may comprise accessing one or more meshes and textures for an image frame, rasterizing a mesh to identify an overlap between one or more image pixels in an image frame and the mesh, and performing one or more shading operations to calculate a pixel value for one or more of the image pixels. In the techniques to be discussed below the rendering circuitry 1230 is configured to sparsely render an image frame by performing rendering operations for some (a first group) of the image pixels in the image frame so as to render the image frame at a low resolution. For example, the first group of image pixels may represent half of the image pixels included in the image frame such that the rendering circuitry 1230 performs rendering operations for the first group of image pixels to render a half resolution image frame. Alternatively, the first group of image pixels may represent a quarter of the image pixels included in the image frame such that the rendering circuitry 1230 performs rendering operations for the first group of image pixels to render a quarter resolution image frame.. The first group of pixels may comprise 1 in every N image pixels, where N is an integer greater than or equal to 2. Hence more generally, the first group of image pixels comprises a subset of the image pixels in the image frame.

The rendering circuitry 1230 is further configured to select additional image pixels (a second group of image pixels different from the first group of image pixels) in the image frame, for which rendering operations would otherwise not be performed by the rendering circuitry 1230, in dependence upon the calculated gaze direction, and the rendering circuitry 1230 is configured to perform rendering operations for the selected second group of image pixels. In other words, the rendering circuitry 1230 is configured to sparsely render and image frame by performing rendering operations for the first group of image pixels irrespective of the calculated gaze direction, and to select additional image pixels in the image frame depending on the calculated gaze direction to perform rendering operations for the additional image pixels. The first group of image pixels comprises a plurality of image pixels arranged in a pattern so that the image pixels are distributed with respect to the image frame. Therefore, in response to the gaze direction additional pixels positioned between the image pixels in the first group can be selected and rendering operations performed for the selected pixels to increase the image resolution in a portion of the image frame. Hence more generally, the rendering circuitry 1230 can be configured to perform the rendering operations for the first group of image pixels according to a first image-pixel pattern and to perform the rendering operations for the second group of image pixels according to a second image-pixel pattern, the first image-pixel pattern being different from the second image-pixel pattern. In some examples, the image pixels in the first group are arranged in a checkerboard pattern. The rendering circuitry 1230 can be configured to sparsely render and image frame by performing rendering operations for the first group of image pixels, in which the rendering circuitry 1230 can be configured to select the first group of image pixels from the plurality of image pixels in the image frame according to a first image-pixel pattern. The first image-pixel pattern may be the same for each image frame or may vary (e.g. alternate) between image frames.

Therefore, an image frame can be sparsely rendered by rendering some of the image pixels in the image frame, and image pixels in a portion of the image frame corresponding to the gaze direction can be selected as candidate image pixels to be rendered so as to increase the image resolution in the portion of the image frame corresponding to the gaze direction. The portion of the image frame that is expected to be viewed by the user's high acuity vision can be rendered with a higher image resolution in response to the calculated gaze direction. In particular, given the high temporal resolution with which events can be detected by the detector 1210 and thus the high temporal resolution with which the gaze direction can be calculated by the processing circuitry 1220, the rendering circuitry 1230 can be controlled according to the most recently calculated gaze direction such that a gaze direction calculated prior to or during the processing for sparsely rendering the image frame (by rendering the first group of image pixels) can be used to select the second group of image pixels for the image frame.

The rendering circuitry 1230 is configured to render a sequence of image frames. Each image frame comprises a plurality of image pixels (e.g. N x M pixels where N and M are integers), where the first group of image pixels in includes a subset of the plurality of image pixels and the second group of image pixels includes a different subset of the plurality of image pixels. For example, in the case of a 4k UHD image frame, the image frame comprises 3840 x 2160 image pixels and the first group of pixels may comprise 1 in every N image pixels, where N is an integer greater than or equal to 2.

In order to render an image frame, rendering operations can be performed by the rendering circuitry 1230 for each of the image pixels in the image frame (sometimes known as native rendering) so that in the case where the image frame comprises N x M pixels, rendering operations are performed for N x M pixels. However, performing rendering operations for each of the image pixels in this way can result in inefficient use of processing resources because the user's visual system is only capable of perceiving a portion of the image with high visual acuity at any given moment. Therefore, the rendering circuitry 1230 is configured to sparsely render the image frame by performing rendering operations for the first group of image pixels, to select the second group of image pixels on the basis of the calculated gaze direction, and to render the second group of image pixels by performing rendering operations, such that a position of the second group of image pixels in the image frame is dependent on the calculated gaze direction. Therefore, the rendering circuitry 1230 can be configured to render a first image frame in which the second group of image pixels is selected for the first image frame in dependence upon the gaze direction calculated by the processing circuitry 1220 prior to or during the processing for sparsely rendering the first group of image pixels for the first image frame, and the rendering circuitry 1230 can be configured to render a next image frame (second image frame subsequent to the first image frame) in which the second group of image pixels is selected for the second image frame in dependence upon the gaze direction calculated by the processing circuitry 1220 prior to or during the processing for sparsely rendering the first group of image pixels for the next image frame. By selecting the second group of image pixels in this way, the rendering circuitry 1230 is capable of performing a sparse render and identifying which additional pixels should be rendered to supplement the sparse render for the user's most recently calculated gaze direction.

As a result of the high temporal resolution with which the events can be detected by the detector 1210, it is possible for the gaze direction to be calculated by the processing circuitry 1220 with a higher frequency compared to techniques that rely on capturing image frames using a fixed frame rate. For example, for techniques using a conventional CCD image sensor to capture image frames, the gaze direction can only be calculated at fixed time intervals (e.g. at intervals of 1/30 seconds for a CCD image sensor having a frame rate of 30 frames per second) and for the case where a sequence of image frames is to be rendered sequentially according to a certain frame rate (e.g. 80 frames per second) it may not be possible to calculate the gaze direction for each image frame. However, since the processing circuitry 1220 is configured to calculate the gaze direction in dependence upon the events detected by the detector 1210, the gaze direction for the eye of the user can be calculated prior to starting to the rendering operations for a given image frame and/or during the rendering operations for the given image frame. Therefore, the rendering circuitry 1220 can be configured to select the second group of image pixels for each respective image frame so as to position the second group of image pixels in each image frame in a manner that accurately reflects the user's most recently detected gaze direction.

In embodiments of the disclosure, the rendering circuitry 1230 is configured to start to perform the rendering operations for the first group of image pixels and to subsequently start to perform the rendering operations for the second group of image pixels. Figure 13a schematically illustrates an example of an image frame 1310 for which rendering operations for the first group of image pixels are started prior to starting rendering operations for the second group of image pixels. Time is represented in the horizontal axis from left to right in Figures 13a and 13b. In the example shown, the image frame 1310 has a time allocation TFrame which represents a period of time within which the rendering operations are to be completed in order to render the image frame 1310. For example, for the case where image frames are to be rendered at a frame rate of N image frames per second, the time allocation TFrame for each image frame may be no more than 1/N seconds. The rendering circuitry 1230 can be configured to start to perform the rendering operations for rendering the first group of image pixels in the image frame at a time T1, and to start to perform the rendering operations for rendering the second group of image pixels in the image frame at a time T2, where T2 is later than T1. Given that any sensor element of the plurality of sensor elements of the detector 1210 is capable of detecting an event at any point in time and generating an output signal, it is possible that a gaze direction for the user may be calculated after the time T1 and prior to the time T2. Therefore, the rendering circuitry 1230 can be configured to start to perform rendering operations for the first group of image pixels at the time T1 to sparsely render the image frame, and the rendering circuitry 1230 can be configured to select the second group of image pixels at any time up to the time T2 in response to the gaze direction calculated by the processing circuitry 1220. Therefore, the rendering circuitry 1230 can select the second group of image pixels in response to the gaze direction calculated by the processing circuitry 1220 during the rendering operations for the first group of image pixels. This allows sparse rendering to be initially performed and then a high resolution portion of the image frame can subsequently be obtained by rendering additional image pixels at a later time so as to allow the image frame to be rendered according to a most recent gaze direction. For example, the first group of image pixels may represent one in every four pixels in the image frame such that rendering operations are performed for a quarter of the image pixels in the image frame during the time period T1 to T2, and the second group of image pixels therefore represents three in every four pixels in the image frame for a given region of the image frame that corresponds to the user's gaze direction, so that the rendering circuitry 1230 performs rendering operations for each image pixel in the given region. The given region of the image frame can thus be rendered by the rendering circuitry 1230 with full resolution (or a higher resolution than the other portions of the image frame) on the basis of the first and second groups of image pixels, whereas the rest of the image frame is rendered at a lower resolution on the basis of the first group of image pixels (e.g. quarter resolution in the case where the first group of image pixels comprises one in every four pixels).

Figure 13a shows rendering operations for the first group of image pixels being performed and then rendering operations for the second group of image pixels being performed once the rendering operations for the first group of image pixels have been completed. However, it will be appreciated that rather than completing the rendering operations for all of the image pixels in the first group of image pixels and then starting the rendering operations for the second group of image pixels, in some examples the rendering circuitry 1230 is configured to start to perform the rendering operations for the second group of image pixels after starting to perform the rendering operations for the first group of image pixels and prior to completing the rendering operations for the first group of image pixels. Figure 13b schematically illustrates an example in which the rendering operations are started for the second group of image pixels at a time T2 which is prior to when the rendering operations for the first group of image pixels are completed. In addition, whilst Figure 13a shows rendering operations for the second group of image pixels being performed once the rendering operations for the first group of image pixels have been completed, in some examples the time T2 at which the rendering circuitry 1230 starts to perform the rendering operations for rendering the second group of image pixels in the image frame 1310 may be deliberately delayed relative to the time at which the rendering operations for the first group of image pixels have been completed, so that a period of time is allowed between completing the rendering operations for the first group of image pixels and starting the rendering operations for the second group of image pixels. In this way, it is possible to delay the time T2 at which the rendering operations start to be performed to allow the second group of image pixels to be selected at a later time within the time allocation TFrame for the image frame. In some examples, the time T2 may be set for the image frame 1310 so as to allow the last portion of the time allocation TFrame to be used for performing the rendering operations for the second group of image pixels.

In embodiments of the disclosure, the processing circuitry 1220 is configured to calculate the gaze direction either during the rendering operations for the first group of image pixels or after the rendering operations for the first group of image pixels are completed. As discussed previously, the faster the motion of the user's eye the more events per second are detected by the detector 1210. Therefore, rather than being restricted to calculating the gaze direction at fixed time intervals, the processing circuitry 1220 can calculate the gaze direction responsive to the detected events from the detector 1210 which can be detected by any given sensor element at any given point in time. As discussed previously with reference to Figures 13a and 13b, the gaze direction can be calculated at a time prior to the time T1 at which the rendering operations start for the first group of image pixels for the image frame 1310 and/or at a time after the time T1 but prior to the time T2 at which the rendering operations start for the second group of image pixels for the image frame 1310. Therefore, the second group of image pixels can be selected for the image frame 1310 depending on a most recent gaze direction calculated by the processing circuitry 1220. In embodiments of the disclosure, the rendering circuitry 1230 is configured to select the second group of image pixels either during the rendering operations for the first group of image pixels or after the rendering operations for the first group of image pixels are completed.

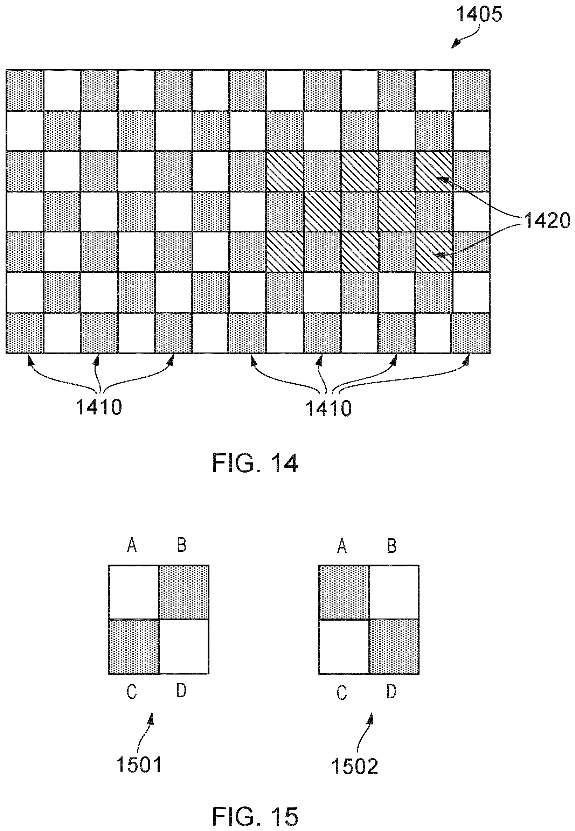

In embodiments of the disclosure, a first portion of the image frame comprising the second group of image pixels and a subset of the first group of image pixels is a high resolution portion of the image frame, and a second portion of the image frame comprising a remainder of the first group of image pixels is a low resolution portion of the image frame. Figure 14 schematically illustrates an example of an image frame 1405 comprising a high resolution portion and a low resolution portion. In the schematic diagram, the first group of image pixels 1410 (shown in Figure 14 as the shaded pixels) comprises one in every two image pixels in the image frame. As discussed previously, the first group of image pixels 1410 may instead comprise one in every four image pixels in the image frame 1405 or more generally one in every N image pixels in the image frame 1405, where N is an integer greater than or equal to 2. The second group of image pixels 1420 (shown in Figure 14 as the hatched pixels) is selected in dependence upon the gaze direction such that together the second group of image pixels 1420 and a subset of the first group of image pixels 1410 provide a high resolution portion of the image frame 1405. In this schematic example, the high resolution portion of the image frame comprises 15 image pixels comprised of the 8 image pixels of the second group of image pixels 1420 and the 7 image pixels from the first group of image pixels. It will be appreciated that this example is provided for illustrative purposes and that the number of image pixels is significantly larger in practice. In this example, the first portion (higher resolution portion) of the image frame comprises the second group of image pixels 1420 and a subset (portion) of the first group of image pixels 1410, and the second portion (lower resolution portion) of the image frame comprises the remaining portion of the first group of image pixels not included in the first portion of the image. As such, in this example, rendering operations are performed by the rendering circuitry 1230 for each image pixel in the first portion of the image frame 1405 such that the first portion is rendered with full resolution and the second portion of the image is rendered with half resolution.

In embodiments of the disclosure, the rendering circuitry 1230 is configured to select the second group of image pixels by selecting a predetermined number of image pixels from the image pixels included in the image frame that are not included in the first group of image pixels. The second group of image pixels is selected so that a plurality of pixels included in the portion of the image frame corresponding to the user's gaze direction that are not rendered as part of the first group of image pixels can be selected for rendering by the rendering circuitry 1230. In other words, first rendering operations can be performed by the rendering circuitry 1230 to render the first group of image pixels, and the rendering circuitry 1230 is configured to select a predetermined number of "un-rendered image pixels" from the image frame that are not rendered as part of the first rendering operations. In the example shown in Figure 14, the rendering circuitry 1230 selects the 8 image pixels that are not included in the first group of image pixels so that by performing rendering operations for both the first and second groups of image pixels a high resolution region of the image frame is obtained. The predetermined number of image pixels selected by the rendering circuitry 1230 is such that the second group and first group together form the high resolution region of the image frame having a size that corresponds to at least the portion of the image observed by the fovea of the user's eye. As has been discussed above, foveal rendering is a rendering technique that takes advantage of the relatively small size (around 2.5 degrees) of the fovea and the sharp fall-off in acuity outside of that. Therefore, the predetermined number of image pixels selected by the rendering circuitry 1230 is determined on the basis of the distance between the user's eye and a display unit for displaying the image frames so that the first portion of the image frame rendered in high resolution corresponds to at least 5 degrees of the visual field for the eye centred upon the calculated gaze direction. The rendering circuitry 1230 is configured to select the second group of image pixels by selecting a predetermined number of image pixels so as to form a high resolution region in the image that is either circular in profile or rectangular in profile. A point of attention for the image frame can be calculated using the calculated gaze direction and image pixels within a predetermined distance of the point of attention can be selected by the rendering circuitry 1230 to form the second group of image pixels.

In embodiments of the disclosure, the first group of image pixels comprises one pixel for every four pixels in the image frame. In this case the rendering circuitry 1230 is configured to sparsely render the image frame at quarter resolution by performing rendering operations for one in every four pixels in the image frame and to select the second group of image pixels from the remaining image pixels in the image frame not included in the first group of image pixels. The image pixels in the image frame not included in either the first group or the second group of image pixels are therefore not rendered by the rendering circuitry 1230. However, in some examples the rendering circuitry 1230 is configured to calculate pixel values for a plurality of the image pixels in the image frame not included in either the first group or the second group of image pixels using a calculation based on pixel values for rendered image pixels in the first group of image pixels. In some examples, pixel values for image pixels in the first group of image pixels for a given image frame can be used to calculate pixel values for a plurality of image pixels in the given image frame that are not included in the first group or second group of image pixels. Alternatively, in some examples pixel values for image pixels in a previous image frame (e.g. frame N-1) can be used to calculate pixel values for a plurality of image pixels in a next image frame (e.g. frame N) that are not included in either the first group or second group of image pixels in the next image frame. Hence more generally, the rendering circuitry 1230 is configured to perform rendering operations for image pixels included in the first group of image pixels and the second group of image pixels, and optionally the rendering circuitry 1230 can be configured to calculate pixel values for a plurality of other image pixels in the image frame using an interpolation calculation or a calculation using image pixels from previous frames (e.g. checkerboard rendering). This is discussed in more detail later.

In embodiments of the disclosure, the first group of image pixels comprises one pixel for every two pixels in the image frame. In this case the rendering circuitry 1230 is configured to sparsely render the image frame at half resolution by performing rendering operations for one in every two pixels in the image frame, as shown in the example in Figure 14, and to select the second group of image pixels from the remaining image pixels in the image frame not included in the first group of image pixels in dependence upon the gaze direction. The image pixels in the image frame not included in either the first group or the second group of image pixels are therefore not rendered by the rendering circuitry 1230. However, as mentioned previously in some examples the rendering circuitry 1230 can be configured to calculate pixel values for at least some of the image pixels not included in the first group or the second group of image pixels using an estimation technique based on image pixels for which rendering operations have been performed. Therefore, the second portion of the image frame (low resolution portion) may therefore be rendered at the lower resolution by performing rendering operations for one in every four (or one in every two) image pixels in this region. In this way, processing resources can be utilised more efficiently without a noticeable degradation of image quality for the user.

In embodiments of the disclosure, the first group of image pixels comprises a plurality of 2x2 pixel groups in the image frame. The image frame comprises N x M image pixels and can be considered as being formed of multiple 2x2 pixel groups (also known as 2x2 pixel blocks). Specifically, for an image frame comprising N x M image pixels there are N/2 x M/2 2x2 pixel groups. In the case where the first group of image pixels comprises one pixel for every four pixels in the image frame, the first group of image pixels comprises a plurality of 2x2 pixel groups in which rendering operations are performed for one image pixel in each of the 2x2 pixel groups. In the case where the first group of image pixels comprises one pixel for every two pixels in the image frame, the first group of image pixels comprises a plurality of 2x2 pixel groups in which rendering operations are performed for two image pixels in each of the 2x2 pixel groups. In dependence upon the detected gaze direction, the rendering circuitry 1230 can be configured to select the second group of image pixels such that for some of the 2x2 pixel groups the rendering circuitry 1230 performs rendering operations for all of the image pixels within a 2x2 pixel group. This is illustrated in the example in Figure 14 from which it can be seen that for a 2x2 pixel group included in the high resolution portion of the image frame, two of the image pixels are rendered as part of the first group and two of the image pixels are rendered as part of the second group. However, as illustrated in Figure 14, for the portion of the image not corresponding to the calculated gaze direction, the 2x2 image pixel groups each comprise two image pixels rendered by the rendering circuitry 1230 as part of the rendering of the first group of image pixels and two image pixels which are not rendered by the rendering circuitry 1230. As explained previously, even though the two image pixels in the 2x2 image pixel group are not rendered by the rendering circuitry 1230 for the low resolution region, in some examples pixel values can be calculated for the two image pixels using an estimation technique. For example, pixel values may be calculated for the two mage pixels using an interpolation of the pixel values for the rendered image pixels in the same 2x2 pixel group or an interpolation of the pixel values for the rendered image pixels in the same 2x2 pixel group and one or more adjacent 2x2 pixel groups.

In embodiments of the disclosure, the rendering circuitry is configured to calculate pixel values for a plurality of image pixels in the image frame not included in the first and second groups of image pixels using a plurality of 2x2 pixel groups in a previous image frame. The rendering circuitry 1230 is configured to render a sequence of image frames each including a plurality of pixels, and some of the rendered image pixels in a previous image frame can be used for calculating pixel values for some of the image pixels in a next image frame which are not included in the first group and second group of image pixels. The rendering circuitry 1230 is configured to sparsely render each image frame by performing rendering operations for the first group of image pixels, in which a pattern for the first group of image pixels may alternate between image frames. Figure 15 schematically illustrates an example of a 2x2 pixel group for an image frame 1501 and a 2×2 pixel group for a next image frame 1502 in a sequence of image frames rendered by the rendering circuitry 1230. In the example shown, the image frame 1501 is rendered such that rendering operations are performed for the image pixels B and C as part of rendering the first group of image pixels. For the image frame 1502, rendering operations are performed for the image pixels A and D as part of rendering the first group of image pixels. Therefore, the rendering circuitry 1230 can be configured to perform the rendering operation for the first image pixel group for a first image frame 1501 according to a first image-pixel pattern and to perform the rendering operation for the first image pixel group for a second image frame 1502 according to a second image-pixel pattern. In this way, when rendering the second image frame 1502, the rendering circuitry 1230 can perform rendering operations to render the image pixels A and D as part of rendering the first group of image pixels and the rendering circuitry 1230 can calculate pixel values for the image pixels B and D based on the pixel values for the rendered image pixels B and C in the previous image frame 1501. In some examples, motion vectors indicative of motion of pixels from frame to frame may be used to calculate the pixel values for the image pixels B and D based on at least the pixel values for the rendered image pixels in the previous image frame 1501. Consequently, in the example shown the rendering circuitry 1230 sparsely renders the image frames at half resolution and calculates pixels value for the unrendered image pixels not included in the first and second groups so that each image pixel in the 2x2 pixel group has a pixel value. Figure 15 illustrates an example in which rendering operations are performed for two image pixels in each of the 2x2 pixel groups as part of the rendering operations for the first group of image pixels. It will be appreciated that in the case where the rendering circuitry 1230 is configured to sparsely render each image frame at quarter resolution, each 2x2 pixel group includes one rendered image pixel and the same technique using a previous image frame can be implemented so as to calculate pixels value for at least some of the unrendered image pixels not included in the first and second groups in the image frame. For example, the rendering circuitry 1230 may be configured to sparsely render each image frame at quarter resolution and to calculate pixel values for some of the image pixels so that an image frame can be obtained for which one in every two pixels in the low resolution region have a pixel value.

In embodiments of the disclosure, the rendering circuitry 1230 is configured to calculate pixel values for a plurality of image pixels in the image frame not included in the first and second groups of image pixels by interpolating at least a subset of the first group of image pixels. The pixel values of the rendered image pixels included in the first group of image pixels can be used by the rendering circuitry 1230 to perform interpolation calculations to calculate pixel values for some (or all) of the image pixels in the image frame that are not rendered as part of the rendering the first and second image pixel groups. As illustrated in Figure 14, the first group of image pixels comprises one in every two image pixels, and as such each empty image pixel (not rendered by the rendering circuitry) is adjacent to four rendered image pixels. Consequently, the rendering circuitry can perform an interpolation calculation using the pixel values for the adjacent rendered image pixels. In a simplest case, a simple averaging of the adjacent pixel values may be used to calculate pixel values for the empty pixels however it will be appreciated that other interpolation techniques may similarly be used. Similarly, in the case where the first group of image pixels comprises one in every four image pixels a similar interpolation calculation can be used to calculate pixel values for the empty image pixels.

In embodiments of the disclosure, the rendering circuitry 1230 is configured to select the plurality of image pixels from the image pixels not included in the first and second groups of image pixels in dependence upon the calculated gaze direction. The rendering circuitry 1230 is configured to select the second group of image pixels in dependence upon the gaze direction so that image pixels not rendered as part of the first group of image pixel are selected and rendered. For example, a point of attention for the image frame may be calculated in dependence upon the calculated gaze direction and image pixels within a predetermined distance of the point of attention can be selected for forming the second group of image pixels. In this way, a high resolution portion of the image frame can be obtained. In addition, whilst in some cases the low resolution portion of the image frame may comprise rendered pixels (e.g. 1 in 4 pixels) and empty pixels, in some cases pixel values for a plurality of the empty pixels can be calculated. As discussed above, pixel values for a plurality of image pixels not included in the first and second groups of image pixels can be calculated by using an interpolation calculation or using rendered image pixels from a previously rendered image frame where the first group of image pixels has a pattern that alternates between image frames. Rather than calculating pixel values for all of the empty pixels in the low resolution portion of the image frame, the rendering circuitry 1230 can be configured to select a plurality of image pixels from the mage pixels not included in the first and second groups of image pixels so as to calculate pixel values for a portion of the image surrounding the second group of image pixels. Therefore, the resulting image frame comprises the first portion (high resolution portion) formed of some of the image pixels in the first group and the image pixels in the second group (e.g. circular or rectangular in shape), an intermediate portion formed of some of the image pixels in the first group and the plurality of image pixels for which pixel values are calculated using the adjacent image pixels in the first group or image pixels in a previous image frame, and the second portion (low resolution portion) formed of the remaining image pixels in the first group. The first portion is surrounded by the intermediate portion which is in turn surrounded by the second portion. A first predetermined distance from the point of attention corresponding to the calculated gaze direction can be used for selecting the second group of image pixels, and a second predetermined distance from the point of attention can be used for selecting the plurality of image pixels not included in the first and second group, where the first predetermined distance is smaller than the second predetermined distance.

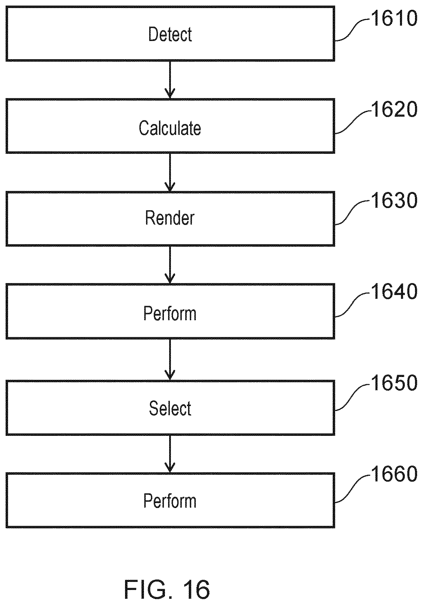

Referring now to Figure 16, in embodiments of the disclosure a data processing method comprises:
detecting (at a step 1610), by a detector comprising a plurality of sensor elements, events in response to changes in light incident upon the detector from an eye of a user;
calculating (at a step 1620) a gaze direction of the eye of the user in dependence upon the detected events; and
rendering (at a step 1630) an image frame in accordance with the calculated gaze direction, in which rendering the image frame comprises:
   performing rendering operations (at a step 1640) for a first group of image pixels in the image frame;
   selecting (at a step 1650) a second group of image pixels in the image frame in dependence upon the calculated gaze direction, the second group of image pixels being different from the first group of image pixels; and
   performing rendering operations (at a step 1660) for the second group of image pixels in the image frame.

It will be appreciated that example embodiments can be implemented by computer software operating on a general purpose computing system such as a games machine. In these examples, computer software, which when executed by a computer, causes the computer to carry out any of the methods discussed above is considered as an embodiment of the present disclosure. Similarly, embodiments of the disclosure are provided by a non-transitory, machine-readable storage medium which stores such computer software.

It will also be apparent that numerous modifications and variations of the present disclosure are possible in light of the above teachings. It is therefore to be understood that within the scope of the appended claims, the disclosure may be practised otherwise than as specifically described herein.

## Claims

1. A data processing apparatus (1200) comprising:
a detector (1210) comprising a plurality of sensor elements to detect events in response to changes in light incident upon the detector from an eye of a user;
processing circuitry (1220) to calculate a gaze direction of the eye of the user in dependence upon an output signal from the detector indicative of the detected events, the output signal being generated by a sensor element of the plurality of sensor elements when light incident upon the sensor element satisfies a criterion used for event detection, the processing circuitry (1220) being configured to calculate the gaze direction in response to the detected events; and
rendering circuitry (1230) to render an image frame in accordance with the calculated gaze direction, in which the rendering circuitry is configured to:
perform rendering operations for a first group of image pixels in the image frame;
select a second group of image pixels in the image frame in dependence upon the calculated gaze direction, the second group of image pixels being different from the first group of image pixels; and
perform rendering operations for the second group of image pixels in the image frame.

2. The data processing apparatus according to claim 1, in which the rendering circuitry is configured to start to perform the rendering operations for the first group of image pixels and to subsequently start to perform the rendering operations for the second group of image pixels.

3. The data processing apparatus according to claim 1 or claim 2, in which the processing circuitry is configured to calculate the gaze direction either during the rendering operations for the first group of image pixels or after the rendering operations for the first group of image pixels are completed.

4. The data processing apparatus according to any preceding claim, in which the rendering circuitry is configured to select the second group of image pixels either during the rendering operations for the first group of image pixels or after the rendering operations for the first group of image pixels are completed.

5. The data processing apparatus according to any preceding claim, in which a first portion of the image frame comprising the second group of image pixels and a subset of the first group of image pixels is a high resolution portion of the image frame, and a second portion of the image frame comprising a remainder of the first group of image pixels is a low resolution portion of the image frame.

6. The data processing apparatus according to any preceding claim, in which the first group of image pixels comprises one or more selected from the list consisting of:
i. a subset of the image pixels in the image frame;
ii. one pixel for every four pixels in the image frame; and
iii. one pixel for every two pixels in the image frame.

7. The data processing apparatus according to claim 6, in which the first group of image pixels comprises a plurality of 2x2 pixel groups in the image frame.

8. The data processing apparatus according to claim 7, in which the rendering circuitry is configured to calculate pixel values for a plurality of image pixels in the image frame not included in the first and second groups of image pixels using a plurality of 2x2 pixel groups in a previous image frame.

9. The data processing apparatus according to any one of claims 1-7, in which the rendering circuitry is configured to calculate pixel values for a plurality of image pixels in the image frame not included in the first and second groups of image pixels by interpolating at least a subset of the first group of image pixels.

10. The data processing apparatus according to claim 8 or claim 9, in which the rendering circuitry is configured to select the plurality of image pixels in dependence upon the calculated gaze direction.

11. The data processing apparatus according to any preceding claim, in which the output signal from the detector comprises a stream of detected events, each detected event comprising sensor element position information.

12. The data processing apparatus according to claim 11, in which each detected event comprises time information.

13. The data processing apparatus according to any preceding claim, comprising an event camera, the event camera comprising the detector.

14. A data processing method, comprising:
detecting (1610), by a detector comprising a plurality of sensor elements, events in response to changes in light incident upon the detector from an eye of a user;
calculating (1620) a gaze direction of the eye of the user in dependence upon an output signal from the detector indicative of the detected events, the output signal being generated by a sensor element of the plurality of sensor elements when light incident upon the sensor element satisfies a criterion used for event detection, the calculating a gaze direction being configured to calculate the gaze direction in response to the detected events;
rendering (1630) an image frame in accordance with the calculated gaze direction, in which rendering the image frame comprises:
performing (1640) rendering operations for a first group of image pixels in the image frame;
selecting (1650) a second group of image pixels in the image frame in dependence upon the calculated gaze direction, the second group of image pixels being different from the first group of image pixels; and
performing (1660) rendering operations for the second group of image pixels in the image frame.

15. Computer software which, when executed by a computer, causes the computer to perform the method of claim 14.

## Patentansprüche

1. Datenverarbeitungseinrichtung (1200), umfassend:
einen Detektor (1210), der eine Vielzahl von Sensorelementen umfasst, um Ereignisse als Reaktion auf Änderungen im Licht, das von einem Auge eines Benutzers auf den Detektor auftrifft, zu erkennen;
Verarbeitungsschaltlogik (1220) zum Berechnen einer Blickrichtung des Auges des Benutzers in Abhängigkeit von einem Ausgabesignal von dem Detektor, das die erkannten Ereignisse angibt, wobei das Ausgabesignal von einem Sensorelement der Vielzahl von Sensorelementen erzeugt wird, wenn auf das Sensorelement auftreffendes Licht ein für die Ereigniserkennung verwendetes Kriterium erfüllt, wobei die Verarbeitungsschaltlogik (1220) konfiguriert ist, um die Blickrichtung als Reaktion auf die erkannten Ereignisse zu berechnen;
und
Rendering-Schaltlogik (1230) zum Rendern eines Einzelbildes in Übereinstimmung mit der berechneten Blickrichtung, wobei die Rendering-Schaltlogik konfiguriert ist zum:
Durchführen von Rendering-Operationen für eine erste Gruppe von Bildpixeln in dem Einzelbild;
Auswählen einer zweiten Gruppe von Bildpixeln in dem Einzelbild in Abhängigkeit von der berechneten Blickrichtung, wobei sich die zweite Gruppe von Bildpixeln von der ersten Gruppe von Bildpixeln unterscheidet; und
Durchführen von Rendering-Operationen für die zweite Gruppe von Bildpixeln in dem Einzelbild.

2. Datenverarbeitungseinrichtung nach Anspruch 1, bei der die Rendering-Schaltlogik konfiguriert ist, um mit dem Durchführen der Rendering-Operationen für die erste Gruppe von Bildpixeln zu beginnen und anschließend mit dem Durchführen der Rendering-Operationen für die zweite Gruppe von Bildpixeln zu beginnen.

3. Datenverarbeitungseinrichtung nach Anspruch 1 oder Anspruch 2, bei der die Verarbeitungsschaltlogik konfiguriert ist, um die Blickrichtung entweder während der Rendering-Operationen für die erste Gruppe von Bildpixeln oder nach Abschluss der Rendering-Operationen für die erste Gruppe von Bildpixeln zu berechnen.

4. Datenverarbeitungseinrichtung nach einem der vorstehenden Ansprüche, bei der die Rendering-Schaltlogik konfiguriert ist, um die zweite Gruppe von Bildpixeln entweder während der Rendering-Operationen für die erste Gruppe von Bildpixeln oder nach Abschluss der Rendering-Operationen für die erste Gruppe von Bildpixeln auszuwählen.

5. Datenverarbeitungseinrichtung nach einem der vorstehenden Ansprüche, bei der ein erster Abschnitt des Einzelbildes, der die zweite Gruppe von Bildpixeln und eine Teilmenge der ersten Gruppe von Bildpixeln umfasst, ein hochauflösender Abschnitt des Einzelbildes ist, und ein zweiter Abschnitt des Einzelbildes, der einen Rest der ersten Gruppe von Bildpixeln umfasst, ein niedrigauflösender Abschnitt des Einzelbildes ist.

6. Datenverarbeitungseinrichtung nach einem der vorstehenden Ansprüche, bei der die erste Gruppe von Bildpixeln eines oder mehrere aus der Liste umfasst, die aus Folgendem besteht:
i. einer Teilmenge der Bildpixel in dem Einzelbild;
ii. einem Pixel für jeweils vier Pixel in dem Einzelbild und
iii. einem Pixel für jeweils zwei Pixel in dem Einzelbild.

7. Datenverarbeitungseinrichtung nach Anspruch 6, bei der die erste Gruppe von Bildpixeln eine Vielzahl von 2x2-Pixelgruppen in dem Einzelbild umfasst.

8. Datenverarbeitungseinrichtung nach Anspruch 7, bei der die Rendering-Schaltlogik konfiguriert ist, um Pixelwerte für eine Vielzahl von Bildpixeln in dem Einzelbild, die nicht in der ersten und zweiten Gruppe von Bildpixeln enthalten sind, unter Verwendung einer Vielzahl von 2x2-Pixelgruppen in einem vorherigen Einzelbild zu berechnen.

9. Datenverarbeitungseinrichtung nach einem der Ansprüche 1 bis 7, bei der die Rendering-Schaltlogik konfiguriert ist, um Pixelwerte für eine Vielzahl von Bildpixeln in dem Einzelbild, die nicht in der ersten und zweiten Gruppe von Bildpixeln enthalten sind, zu berechnen, indem sie zumindest eine Teilmenge der ersten Gruppe von Bildpixeln interpoliert.

10. Datenverarbeitungseinrichtung nach Anspruch 8 oder Anspruch 9, bei der die Rendering-Schaltlogik konfiguriert ist, um die Vielzahl von Bildpixeln in Abhängigkeit von der berechneten Blickrichtung auszuwählen.

11. Datenverarbeitungseinrichtung nach einem der vorstehenden Ansprüche, bei der das Ausgabesignal von dem Detektor einen Strom erkannter Ereignisse umfasst, wobei jedes erkannte Ereignis Informationen zur Position des Sensorelements umfasst.

12. Datenverarbeitungseinrichtung nach Anspruch 11, bei der jedes erkannte Ereignis Zeitinformationen umfasst.

13. Datenverarbeitungseinrichtung nach einem der vorstehenden Ansprüche, umfassend eine Ereigniskamera, wobei die Ereigniskamera den Detektor umfasst.

14. Datenverarbeitungsverfahren, umfassend:
Erkennen (1610) von Ereignissen durch einen Detektor, der eine Vielzahl von Sensorelementen umfasst, als Reaktion auf Änderungen im Licht, das von einem Auge eines Benutzers auf den Detektor auftrifft;
Berechnen (1620) einer Blickrichtung des Auges des Benutzers in Abhängigkeit von einem Ausgabesignal von dem Detektor, das die erkannten Ereignisse angibt, wobei das Ausgabesignal von einem Sensorelement der Vielzahl von Sensorelementen erzeugt wird, wenn auf das Sensorelement auftreffendes Licht ein für die Ereigniserkennung verwendetes Kriterium erfüllt, wobei die Berechnung einer Blickrichtung konfiguriert ist, um die Blickrichtung als Reaktion auf die erkannten Ereignisse zu berechnen;
und
Rendern (1630) eines Einzelbildes in Übereinstimmung mit der berechneten Blickrichtung, wobei Rendern des Einzelbildes umfasst:
Durchführen (1640) von Rendering-Operationen für eine erste Gruppe von Bildpixeln in dem Einzelbild;
Auswählen (1650) einer zweiten Gruppe von Bildpixeln in dem Einzelbildrahmen in Abhängigkeit von der berechneten Blickrichtung, wobei sich die zweite Gruppe von Bildpixeln von der ersten Gruppe von Bildpixeln unterscheidet; und
Durchführen (1660) von Rendering-Operationen für die zweite Gruppe von Bildpixeln in dem Einzelbild.

15. Computersoftware, die, wenn sie von einem Computer ausgeführt wird, den Computer zum Durchführen des Verfahrens nach Anspruch 14 veranlasst.

## Revendications

1. Appareil de traitement de données (1200) comprenant :
un détecteur (1210) comprenant une pluralité d'éléments capteurs pour détecter des événements en réponse à des changements dans de la lumière incidente sur le détecteur en provenance d'un oeil d'un utilisateur ;
un système de circuit de traitement (1220) pour calculer une direction de regard de l'oeil de l'utilisateur en dépendance d'un signal de sortie provenant du détecteur indiquant les événements détectés, le signal de sortie étant généré par un élément capteur de la pluralité d'éléments capteurs lorsque de la lumière incidente sur l'élément capteur respecte un critère utilisé pour une détection d'événement, le système de circuit de traitement (1220) étant configuré pour calculer la direction de regard en réponse aux événements détectés ;
et
un système de circuit de restitution (1230) pour restituer une trame d'image conformément à la direction de regard calculée, dans lequel le système de circuit de restitution est configuré pour :
mettre en oeuvre des opérations de restitution pour un premier groupe de pixels d'image dans la trame d'image ;
sélectionner un second groupe de pixels d'image dans la trame d'image en dépendance de la direction de regard calculée, le second groupe de pixels d'image étant différent du premier groupe de pixels d'image ; et
mettre en oeuvre des opérations de restitution pour le second groupe de pixels d'image dans la trame d'image.

2. Appareil de traitement de données selon la revendication 1, dans lequel le système de circuit de restitution est configuré pour commencer à mettre en oeuvre les opérations de restitution pour le premier groupe de pixels d'image et commencer ensuite à mettre en oeuvre les opérations de restitution pour le second groupe de pixels d'image.

3. Appareil de traitement de données selon la revendication 1 ou la revendication 2, dans lequel le système de circuit de traitement est configuré pour calculer la direction de regard soit pendant les opérations de restitution pour le premier groupe de pixels d'image soit après que les opérations de restitution pour le premier groupe de pixels d'image sont achevées.

4. Appareil de traitement de données selon l'une quelconque revendication précédente, dans lequel le système de circuit de restitution est configuré pour sélectionner le second groupe de pixels d'image soit pendant les opérations de restitution pour le premier groupe de pixels d'image soir après que les opérations de restitution pour le premier groupe de pixels d'image sont achevées.

5. Appareil de traitement de données selon l'une quelconque revendication précédente, dans lequel une première partie de la trame d'image comprenant le second groupe de pixels d'image et un sous-ensemble du premier groupe de pixels d'image est une partie à haute résolution de la trame d'image, et une seconde partie de la trame d'image comprenant un reste du premier groupe de pixels d'image est une partie à faible résolution de la trame d'image.

6. Appareil de traitement de données selon l'une quelconque revendication précédente, dans lequel le premier groupe de pixels d'image comprend un ou plusieurs choisis parmi la liste constituée par :
i. un sous-ensemble des pixels d'image dans la trame d'image ;
ii. un pixel pour tous les quatre pixels dans la trame d'image ; et
iii. un pixel pour tous les deux pixels dans la trame d'image.

7. Appareil de traitement de données selon la revendication 6, dans lequel le premier groupe de pixels d'image comprend une pluralité de groupes de 2x2 pixels dans la trame d'image.

8. Appareil de traitement de données selon la revendication 7, dans lequel le système de circuit de restitution est configuré pour calculer des valeurs de pixel pour une pluralité de pixels d'image dans la trame d'image non inclus dans les premier et second groupes de pixels d'image à l'aide d'une pluralité de groupes de 2x2 pixels dans une trame d'image précédente.

9. Appareil de traitement de données selon l'une quelconque des revendications 1 à 7, dans lequel le système de circuit de restitution est configuré pour calculer des valeurs de pixel pour une pluralité de pixels d'image dans la trame d'image non inclus dans les premier et second groupes de pixels d'image par interpolation d'au moins un sous-ensemble du premier groupe de pixels d'image.

10. Appareil de traitement de données selon la revendication 8 ou la revendication 9, dans lequel le système de circuit de restitution est configuré pour sélectionner la pluralité de pixels d'image en dépendance de la direction de regard calculée.

11. Appareil de traitement de données selon l'une quelconque revendication précédente, dans lequel le signal de sortie provenant du détecteur comprend un flux d'événements détectés, chaque événement détecté comprenant des informations de position d'élément capteur.

12. Appareil de traitement de données selon la revendication 11, dans lequel chaque événement détecté comprend des informations temporelles.

13. Appareil de traitement de données selon l'une quelconque revendication précédente, comprenant une caméra d'événement, la caméra d'événement comprenant le détecteur.

14. Procédé de traitement de données, comprenant :
la détection (1610), par un détecteur comprenant une pluralité d'éléments capteurs, d'événements en réponse à des changements dans de la lumière incidente sur le détecteur en provenance d'un oeil d'un utilisateur ;
le calcul (1620) d'une direction de regard de l'oeil de l'utilisateur en dépendance du signal de sortie provenant du détecteur indiquant les événements détectés, le signal de sortie étant généré par un élément capteur de la pluralité d'éléments capteurs lorsque de la lumière incidente sur l'élément capteur respecte un critère utilisé pour une détection d'événement, le calcul d'une direction de regard étant configuré pour calculer la direction de regard en réponse aux événements détectés ;
et
la restitution (1630) d'une trame d'image conformément à la direction de regard calculée, dans lequel la restitution de la trame d'image comprend :
la mise en oeuvre (1640) d'opérations de restitution pour un premier groupe de pixels d'image dans la trame d'image ;
la sélection (1650) d'un second groupe de pixels d'image dans la trame d'image en dépendance de la direction de regard calculée, le second groupe de pixels d'image étant différent du premier groupe de pixels d'image ; et
la mise en oeuvre (1660) d'opérations de restitution pour le second groupe de pixels d'image dans la trame d'image.

15. Logiciel d'ordinateur qui, lorsqu'il est exécuté par un ordinateur, amène l'ordinateur à mettre en oeuvre le procédé selon la revendication 14.
